# EUROPÄISCHE PATENTSCHRIFT

(11) **EP 1 231 243 B1**
(45) Veröffentlichungstag und Bekanntmachung des Hinweises auf die Patenterteilung: **07.04.2004**
(21) Anmeldenummer: 02000860.3
(22) Anmeldetag: 15.01.2002
(51) Int. Cl.: C09D 11/00

(54) **Tinte für den Ink Jet Druck sowie deren Verwendung**
Ink-jet ink for for ink-jet printing and use thereof
Encre pour l'enregistrement par jet pour l'impression par jet d'encre

(30) Priorität: 30.01.2001 DE 10103851
(43) Veröffentlichungstag der Anmeldung: 14.08.2002
(73) Patentinhaber: J.S. STAEDTLER GmbH & Co, D-90427 Nürnberg (DE)
(72) Erfinder: Rau, Manuela, 90461 Nürnberg (DE); Storck, Wolfgang, 90766 Fürth (DE)

(56) Entgegenhaltungen:
- EP-A- 0 739 958
- GB-A- 1 603 062
- US-A- 2 628 208
- US-A- 5 270 368

## Beschreibung

Die Erfindung betrifft Tinten auf der Basis von Lösungsmitteln für Ink Jet Drucksysteme, insbesondere Continous Jet Systeme, sowie deren Verwendung zur Bedruckung von Kautschuk oder Silikon.

Tinten für die Ink Jet Drucktechnik, zum Bedrucken verschiedener Kunststoffe sind prinzipiell bekannt. Derartige Tinten setzen sich im wesentlichen aus Lösungsmittel, Farbmittel und Bindemittel zusammen. Als Farbmittel werden sowohl Pigmente als auch Farbstoffe eingesetzt.

Nachteilig bei derartigen Tinten ist deren mangelnde Abriebfestigkeit und Haftung auf verschieden Kunststoffarten, insbesondere auf diversen Kautschuk- und Silikonarten.

Zur Beurteilung der Haftfestigkeit wird oftmals der sog. Klebefilm-Test heran gezogen. Bei diesem Test wird über die mit Tinte bedruckte Fläche ein Film geklebt, angedrückt und wieder abgezogen. Ein Maß für die Haftfestigkeit der Tinte auf dem Untergrund ist bei diesem Test die Menge der an dem Klebeband haftenden Tintenreste, welche sich von der bedruckten Oberfläche beim abziehen gelöst haben.

Weiter hat es sich als nachteilig herausgestellt, dass die aufgedruckten Markierungen auf derartigen Kunststoffen, speziell yon Kautschuk und Silikon, leicht mit den Fingern abgerieben werden können oder sich im täglichen Gebrauch schnell abnutzen und die Aufdrucke, welche teilweise wichtige Informationen enthalten, unleserlich oder unansehnlich werden.

So ist beispielsweise aus der **EP 0 730 014 A1** eine Ink Jet Tinte zur Bedruckung von nicht porösen Oberflächen wie Glas, Metall oder Kunststoffbehältern bekannt, wobei die Aufdrucke eine hohe Beständigkeit gegenüber Alkohol aufweisen sollen. Nachteilig bei dieser Tinten ist die mangelnde Haftung auf Kautschuk und Silikon. Ein großer Anteil des Aufdruckes wird beim Klebstreifen-Test von der bedruckten Oberfläche abgelöst.

Weiter ist aus der **US-PS 4 168 254** eine Ink Jet Tinte zur Bedruckung von Polymer umhüllten Kabeln bekannt, welche ein Harz zur Fixierung der Farbmittel auf einem Untergrund enthält. Nachteilig bei einer derartigen Tinte ist es, daß die Abriebfestigkeit nur durch starke Wärmezufuhr erreicht wird. Durch die zugeführte Wärme wird ein chemische Reaktion aktiviert, die eine Vernetzung des Bindemittels bewirkt.

Der Erfindung liegt daher die Aufgabe zu Grunde, eine Tinte auf Basis von Lösungsmitteln für den Ink Jet Druck, insbesondere für Continous Jet Systeme, zu schaffen, die die eingangs genannten Nachteile nicht aufweist und die auf fast allen Kunststoffen und sonstigen glatten Körpern und Flächen sehr gut haftet.

Die Aufgabe, eine Tinte der eingangs genannten Art zu schaffen, wird mit den Merkmalen des Anspruchs 1 gelöst. Bevorzugte Ausführungsformen und vorteilhafte Weiterbildungen und Anwendungen sind in den ergänzenden Ansprüchen umfaßt.

Diese Tinte für Ink Jet Drucksysteme, insbesondere Continous Jet Systeme, setzt sich hauptsächlich aus den Bestandteilen Farbmittel, organische Lösungsmittel, Leitfähigkeitsvermittler sowie mindestens einem Bindemittel zusammen.

Erfindungsgemäß weist die Tinte eine spezielle Mischung, mindestens zweier verschiedene Bindemittel (BM 1 und BM 2) auf.
Ein erstes Bindemittel (BM 1) ist ein Haftvermittler oder auch Primer genannt, bei dem es sich vorzugsweise um ein chemisch modifiziertes Polypropylen, um ein chemisch modifiziertes niedrig-chloriertes Polypropylen und/oder niedrig-chloriertes Polypropylen handelt.
Ebenso kann es sich bei diesem ersten Bindemittel um ein chemisch modifiziertes Polyethylen handeln. Diese Bindemittel weisen vor allem auch in der Kombination mit den anderen Komponenten eine sehr hohe Affinität zu Kautschuk und Silikon auf.

Bei dem weiteren Bindemittel (BM 2) handelt es sich unter anderem vorzugsweise um Acrylpolymere auf der Basis von Iso-Buthylmethacrylat, Methylmethacrylat und/oder Ethylacrylat. Diese Bindemittel (BM 2) dienen hierbei vor allem zur Fixierung der in der Tinte enthaltenen Farbmittel auf dem bedruckten Untergrund, sowie zur Einstellung der Viskosität, damit die Tinte im Gerät problemlos funktioniert. Eine optimale Viskosität für das Continous Jet Verfahren liegt im Bereich von 1 bis 10 mPas.

Die Erfindung soll nachfolgend anhand einiger Tintenbeispiele näher beschrieben werden.

### Beispiel 1 (Rahmenbeispiel) :

| | |
|---|---|
| 50 bis 85 Gew.-% | Lösungsmittel (LM), |
| 0,5 bis 18 Gew.-% | Bindemittel (BM 1) als Haftvermittler, |
| 0,1 bis 15 Gew.- % | Bindemittel (BM 2) als Fixiermittel, |
| 2 bis 15 Gew.-% | Farbmittel (FM), |
| 0,2 bis 1,5 Gew.-% | Leitfähigkeitsvermittler (LV) |
| 0 bis 5 Gew.-% | weitere Zusätze |

### Beispiel 2 (weiße Tinte) (T1):

| | |
|---|---|
| 71,5 Gew.-% | Keton als Lösungsmittel (LM), |
| 6 Gew.-% | Haftvermittler (BM 1), |
| 11 Gew.-% | Acrylatharz (BM 2) |
| 11 Gew.-% | TiO₂ als Farbmittel (FM), |
| 0,5 Gew.-% | Leitfähigkeitsvermittler (LV) |

### Beispiel 3 (schwarze Tinte) (T2):

| | |
|---|---|
| 79,2 Gew.-% | Keton als Lösungsmittel (LM), |
| 4 Gew.-% | Haftvermittler (BM 1), |
| 10 Gew.-% | Acrylatharz (BM 2) |
| 6 Gew.-% | Solvent Black 29 als Farbmittel (FM), |
| 0,8 Gew.-% | Leitfähigkeitsvermittler (LV) |

### Beispiel 4 (violette Tinte) (T3):

| | |
|---|---|
| 79,2 Gew.-% | Keton als Lösungsmittel (LM), |
| 4 Gew.-% | Haftvermittler (BM 1), |
| 10 Gew.-% | Acrylatharz (BM 2) |
| 6 Gew.-% | Acid Violet 66 als Farbmittel (FM), |
| 0,8 Gew.-% | Leitfähigkeitsvermittler (LV) |

Jede der Tinten aus den Beispielen 1 bis 4 enthält als organisches Lösungsmittel (LM) ein Keton, wie beispielsweise Aceton und/oder Ethylmethylketon, welchem Cyclohexanone, Ethylacetat, Isopropanol und/oder Aromaten zugesetzt sein können.
Die verwendeten Lösungsmittel sollen die zu bedruckenden Kunststoffe nicht anlösen.

Als Farbmittel (FM) können Pigmente wie beispielsweise Titanoxid oder Farbstoffe wie Solvent Black 29, einem chromkomplex, Solvent Black 28, oder Acid Violet 66, ein Azochromkomplex Verwendung finden.
Neben den bereits genannten Farbmitteln können aber auch verträgliche andere Farbstoffe oder Farbpigmente eingesetzt werden.
Dabei ist es unerheblich, ob die Farbstoffe in trockener oder in flüssiger Form vorliegen. Ebenso können die eingesetzten Pigmente rein oder in sogenannten Pigmentpräparationen vorliegen.

Die in der Tinte enthaltenen Leitfähigkeitvermittler (LV) können Kaliumthiocyanat, Lithiumnitrat und/oder Natriumperchlorat sein.

Eine derartige Tinte eignet sich speziell für die Verwendung zum Bedrucken oder Beschriften von Gegenständen aus Kunststoffen, insbesondere aus Kautschuk oder aus Silikonmassen.

## Patentansprüche

1. Tinte zum Bedrucken von Silikon und Kautschuk mittels Ink Jet Drucksystemen, vorzugsweise für Continuous Jet Systeme, wobei die Tinte als hauptsächliche Bestandteile Farbmittel, organische Lösungsmittel, Leitfähigkeitsvermittler sowie mindestens zwei verschiedene Bindemittel aufweist,
**dadurch gekennzeichnet,**
**dass** ein erstes Bindemittel (BM 1) ein Haftvermittler ist, **dass** das erste Bindemittel (BM 1) ein chemisch modifiziertes Polypropylen, ein chemisch modifiziertes niedrig-chloriertes Polypropylen, ein niedrig-chloriertes Polypropylen ist und/oder ein chemisch modifiziertes Polyethylen ist,
**dass** ein zweites Bindemittel (BM2) ein Fixiermittel und Mittel zur Einstellung der Viskosität ist
**und dass** das zweite Bindemittel (BM 2) ein Acrylpolymer auf der Basis von Iso-Buthylmethacrylat, ein Methylmethacrylat und/oder ein Ethylacrylat ist.

2. Tinte nach Anspruch 1,
**dadurch gekennzeichnet,**
| | |
|---|---|
| 50 bis 85 Gew.-% | Lösungsmittel (LM), |
| 0,5 bis 18 Gew.-% | Bindemittel (BM 1), |
| 0,1 bis 15 Gew.-% | Bindemittel (BM 2) |
| 2 bis 15 Gew.-% | Farbmittel (FM), |
| 0,2 bis 1,5 Gew.-% | Leitfähigkeitsvermittler (LV) und ggf. |
| 0 bis 5 Gew.-% | weitere Zusätze enthält. |

## Claims

1. Ink for printing on silicon and rubber by means of ink-jet printing systems, preferably for continuous jet systems, wherein the ink has as principal constituents colorant, organic solvent, conductivity mediator and at least two different binders, **characterised in that** a first binder (BM 1) is an adhesion agent, that the first binder (BM 1) is a chemically modified polypropylene, a chemically modified low-chlorinated polypropylene, a low-chlorinated polypropylene and/or a chemically modified polyethylene, that a second binder (BM 2) is a fixing agent and means for setting viscosity and that the second binder (BM 1) is an acryl polymer on the basis of iso-butylmethacrylate, a methylmethacrylate and/or an ethylacrylate.

2. Ink according to claim 1, **characterised in that** in contains
50 to 85 weight % of solvent (LM),
0.5 to 18 weight % of binder (BM 1),
0.1 to 15 weight % of binder (BM 2),
2 to 15 weight % of colorant (FM),
0.2 to 1.5 weight % of conductivity mediator (LV) and optionally
0 to 5 weight % of further additives.

## Revendications

1. Encre pour impression sur du silicone et du caoutchouc au moyen de systèmes d'impression par jet d'encre, de préférence pour des systèmes à jet continu, l'encre contenant en tant que constituant principal des colorants, des solvants organiques, des substances procurant une conductibilité, ainsi qu'au moins deux liants différents, **caractérisée en ce qu'**un premier liant (BM 1) est un agent procurant une adhérence, **en ce que** le premier liant (BM 1) est un polypropylène chimiquement modifié, un polypropylène faiblement chloré chimiquement modifié, un polypropylène faiblement chloré et/ou un polyéthylène chimiquement modifié, **en ce qu'**un second liant (BM 2) est un fixateur et un agent permettant d'ajuster la viscosité, et **en ce que** le second liant (BM 2) est un polymère acrylique à base de méthacrylate d'isobutyle, un méthacrylate de méthyle et/ou un acrylate d'éthyle.

2. Encre selon la revendication 1, **caractérisée en ce qu'**elle contient
50 à 85 % en masse de solvant (LM),
0,5 à 18 % en masse de liant (BM 1),
0,1 à 15 % en masse de liant (BM 2),
2 à 15 % en masse de colorant (FM),
0,2 à 1,5 % en masse de substance procurant une conductibilité (LV) et éventuellement
0 à 5 % en masse d'autres additifs.
